# EUROPEAN PATENT SPECIFICATION

(11) **EP 4 296 146 B1**
(45) Date of publication and mention of the grant of the patent: **20.11.2024**
(21) Application number: 23178971.0
(22) Date of filing: 13.06.2023
(51) Int. Cl.: B62D 25/16

(54) **LOCKING/UNLOCKING DEVICE FOR VEHICLE MUDGUARDS AND RELATED MUDGUARD ASSEMBLY**
VERRIEGELUNGS-/ENTRIEGELUNGSVORRICHTUNG FÜR FAHRZEUGKOTFLÜGELSCHMUTZFÄNGER UND ZUGEHÖRIGE KOTFLÜGELBAUGRUPPE
DISPOSITIF DE VERROUILLAGE/DÉVERROUILLAGE POUR GARDE-BOUE DE VÉHICULE ET ENSEMBLE GARDE-BOUE ASSOCIÉ

(30) Priority: 20.06.2022 IT 202200012961
(43) Date of publication of application: 27.12.2023
(73) Proprietor: DOMAR S.p.A., 70022 Altamura, Bari (IT)
(72) Inventor: FIORE, Pasquale, I-70022 Altamura, BARI (IT); DENTE, Daniele, I-70022 Altamura, BARI (IT)
(74) Representative: Mitola, Marco

(56) References cited:
- EP-A1- 3 163 094
- WO-A1-2021/073784
- DE-U1- 29 708 681
- GB-A- 2 151 569

## Description

### FIELD OF APPLICATION

The present invention relates to a locking/unlocking device for vehicle mudguards and a related mudguard assembly.

### BACKGROUND ART

As is known, vehicles, in particular industrial vehicles, such as vans, trucks, lorries and heavy vehicles in general, are provided with large mudguards, which need to be fixed to the chassis quickly and at the same time safely.

Mudguards are typically provided with supports comprising hollow tubular elements which are inserted on appropriate support tubes fixed to the vehicle chassis. Mutual fixing is achieved with fixing means, such as screws, bolts, and/or snap fixing clips.

Mudguard supports of the prior art are not free from technical drawbacks.

In particular, the supports are hollow tubular elements made in two parts, typically a straight base fixed to the mudguard by screws, bolts, rivets, and the like, and an annular or arched portion, counter-shaped with respect to the support tubes fixed to the vehicle chassis.

The base and the arched portion are integral with each other by a hinge which thus allows the opening of the arched portion which can be fitted around the support tube and then clamped onto the latter by screws, bolts, or the like, arranged on the opposite side with respect to the hinge itself.

Therefore, the hinge allows the rotation with consequent opening of the arched portion for the mounting and subsequent clamping onto the support tube, without ever allowing the separation between the base and the arched portion. The mounting and unmounting operation is thus facilitated.

Hinges of the solutions of the prior art typically comprise a peg acting as a connecting element and a rotation axis. Said peg is then inserted into appropriate holes of the base and the arched portion, aligned with one another. The insertion of the peg is usually by interlocking.

Said support solutions are thus relatively expensive to make and assemble since they comprise at least three pieces, i.e., the base, the arched portion, and at least one peg, which must be mounted, for example by interlocking, after aligning the holes made on the base and the arched portion.

Moreover, due to the large and continuous vibrations transmitted by the chassis of the moving vehicle, these pegs tend to loosen over time, initially generating annoying vibrations of the support and thus of the mudguard, and in the most serious cases, completely slipping out of the respective seats.

Therefore, on the one hand the solutions of the prior art are relatively expensive to make and assemble, and on the other hand, are not very reliable over time. Solutions of the prior art are described, for example, in WO 2021/073784 A1.

### OVERVIEW OF THE INVENTION

The need is thus felt to solve the drawbacks and limitations mentioned with reference to the prior art.

This need is met by a locking/unlocking device according to claim 1 and a mudguard assembly according to claim 14.

### DESCRIPTION OF THE DRAWINGS

Further features and advantages of the present invention will be more comprehensible from the following description of preferred embodiments thereof, given by way of non-limiting examples, in which:

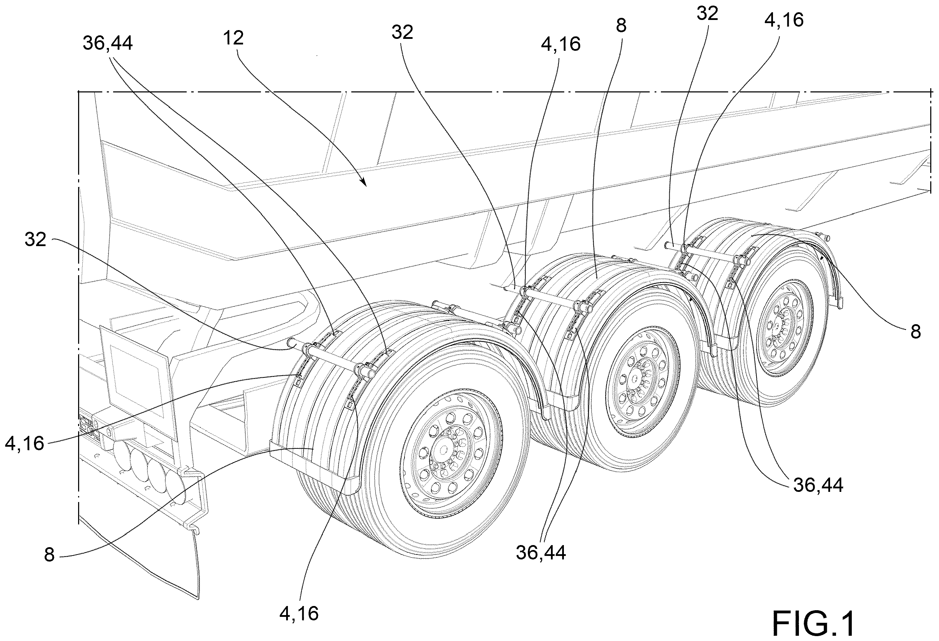

figure 1 shows a perspective view of an industrial vehicle mounting mudguard assemblies provided with locking/unlocking devices according to an embodiment of the present invention;
figure 2 shows a perspective view, in an assembled configuration, of a locking/unlocking device according to an embodiment of the present invention;
figure 3 shows a perspective view, in a configuration with separate parts, of the locking/unlocking device in figure 2;
figure 4 depicts a perspective view, in an assembled configuration, of a locking/unlocking device according to a further embodiment of the present invention;
figure 5 shows a perspective view, in a configuration with separate parts, of the locking/unlocking device in figure 4;
figures 6, 7, 8 show perspective views of a mounting sequence of a locking/unlocking device according to the present invention.

Elements or parts of elements common to the embodiments described below will be indicated by the same reference numerals.

### DETAILED DESCRIPTION

With reference to the aforesaid figures, reference numeral 4 indicates, as a whole, an overall schematic view of a locking/unlocking device for a mudguard 8 of vehicles 12. For the purposes of the present invention, the type of mudguard 8 or even the type of vehicle 12 on which the latter is applied is negligible.

Said locking/unlocking device 4 comprises at least one fixing ring 16 provided with an annular portion 20 and a base 24 delimiting a cylindrical seat 28 of longitudinal axis X-X, adapted to accommodate a support rod 32 for said mudguard 8 associated with the vehicle.

The base 24 is in turn provided with fixing means 36 to be fixed to said mudguard 8, where said fixing means 36 comprise a slide 40 adapted to make a shape coupling with a guide 44 of said mudguard 8, and stop means 48 of said slide 40 on the guide 44 (typically bolts or screws).

The annular portion 20 is constrained to the base 24 at a hinging end 52 and a closing end 56, opposite to the hinging end 52 with respect to the cylindrical seat 28.

Said hinging end 52 comprises a pin 60 defining a hinge axis Y-Y parallel to said longitudinal axis X-X.

In particular, said pin 60 comprises at least one abutment 64', 64" made in a single piece with the base 24 and rotatably housed within a counter-shaped rotation seat 68 made in a single piece with the annular portion 20.

According to an embodiment of the present invention, said rotation seat 68 is open on the opposite side with respect to the base 24.

According to an embodiment of the present invention, said at least one abutment 64',64" is made in a single piece with a central upright 72 of the base 24.

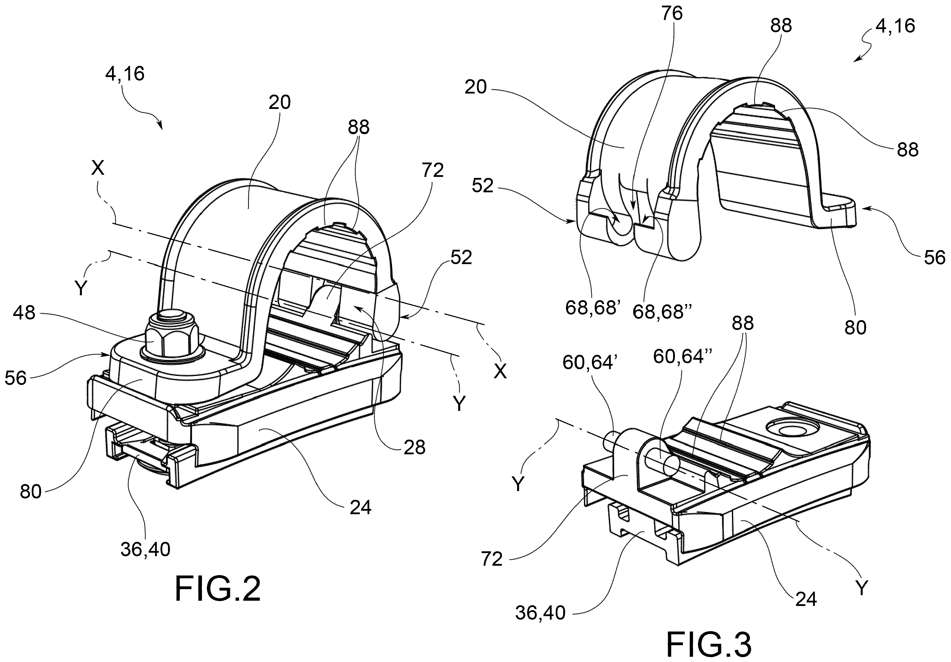

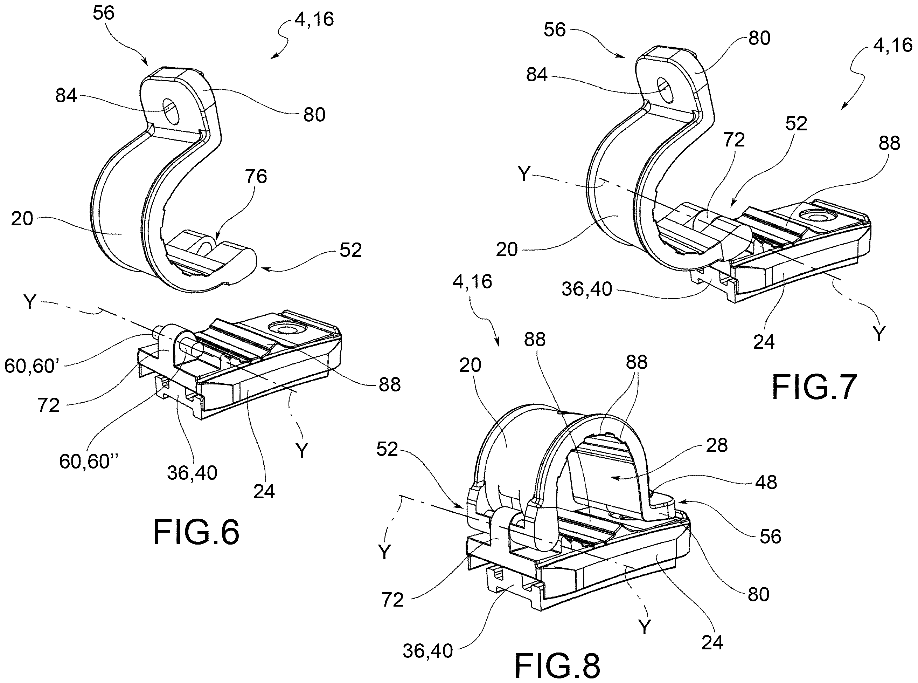

According to an embodiment of the present invention (figures 2,3,6,7,8) said pin 60 comprises a first and a second abutment 64',64", made in a single piece and cantilevered from opposite sides with respect to the central upright 72 of the base 24; each of said abutments 64',64"' is rotatably housed within a rotation seat 68',68" made in a single piece with the annular portion 20.

Preferably, each of said rotation seats 68',68" is open on the opposite side with respect to the base 24.

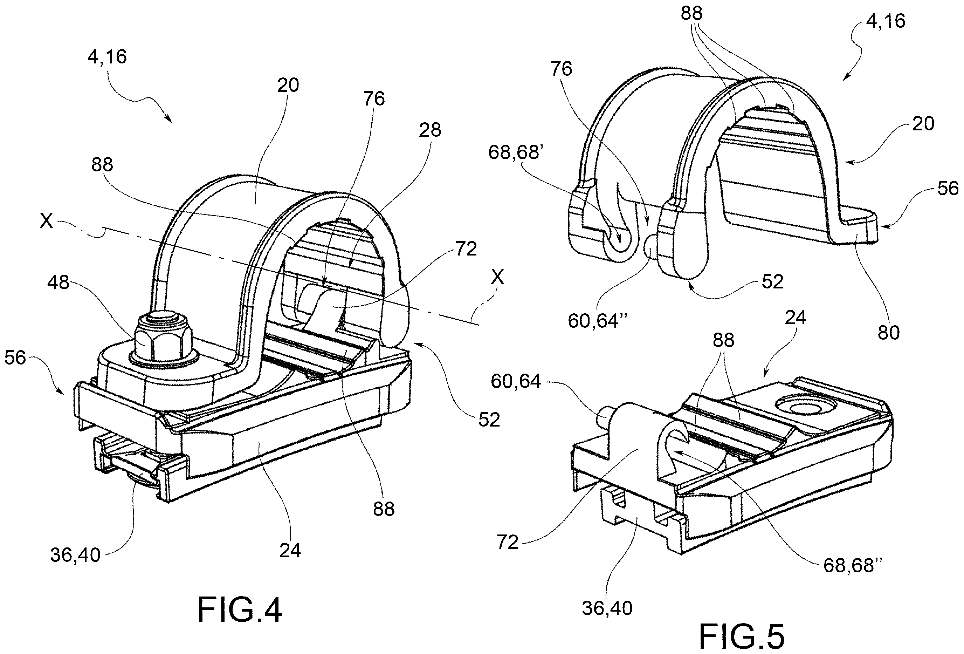

According to an embodiment of the present invention (figures 4,5) said pin 60 comprises a first and a second abutment 64',64", where said first abutment 64' is made in a single piece with a central upright 72 of the base 24 and is housed within a rotation seat 68' made in a single piece with the annular portion 20, and where said second abutment 64" is made in a single piece with the annular portion 20 and is housed within a rotation seat 68" obtained inside said central upright 72, on the opposite side with respect to the first abutment 64'.

In particular, the rotation seat 68' made in a single piece with the annular portion 20 is open on the opposite side with respect to the base 24, whereas the rotation seat 68" made in a single piece with said central upright 72 is open on the side of the base or vice versa.

The annular portion 20, at the hinging end 52, comprises a counter-shaped recess 76 with respect to said central upright 72.

Said recess 76 and/or said hinging end 52 are preferably shaped so as to allow an opening rotation of the annular portion 20 by at least 100 degrees.

The closing end 56 comprises an abutment plate 80 and a clamping hole 84.

The base 24, at the cylindrical seat 28, comprises a plurality of teeth 88 adapted to improve the grip on the associable support rod 32 of the mudguard 8.

According to an embodiment, the annular portion 20, at the cylindrical seat 28, comprises in turn a plurality of teeth 88 adapted to improve the grip on the associable support rod 32 of the mudguard 8.

Preferably, the locking/unlocking device 4 comprises two fixing rings 16, equal and mechanically separate from each other, each fixing ring 16 delimiting a cylindrical seat 28 of longitudinal axis X-X, said cylindrical seats 28 being aligned with each other so as to accommodate the same support rod 32 for said mudguard 8.

As seen, the present invention is also directed to a mudguard assembly comprising a locking/unlocking device 4 and a mudguard 8 provided with at least one guide 44. Preferably, said slide 40 is engaged on said at least one guide 44 and said cylindrical seat 28 partially houses said support rod 32.

According to a possible embodiment, the mudguard 8 is provided with two tangential guides 44 aligned with each other and the locking/unlocking device is provided with two slides 40 and two cylindrical seats 28; each slide 40 is engaged in one of said guides 44 and the cylindrical seats 28 are aligned with each other so as to accommodate the same support rod 32 for the mudguard 8.

As can be appreciated from the description above, the present invention allows overcoming the drawbacks presented in the prior art.

In particular, the present invention is cheap to make and assemble, as well as reliable over time as no loosening, detachments and/or losses of pins over prolonged use arise.

In fact, the manufacturing of the pins as a single piece reduces the total number of components of the locking/unlocking device for mudguards of vehicles and thus also facilitates the subsequent assembly step.

Moreover, there is no risk of pin loss following vibrations and wear, resulting in loosening and vibrations of the mudguard, as instead occurs in the solutions of the prior art.

Preferably, the pins are made of the same plastic material as the fixing ring.

In order to meet contingent, specific needs, those skilled in the art may make several changes and variations to the solutions described above.

The scope of protection of the invention is defined by the following claims.

## Claims

1. Locking/unlocking device (4) for a mudguard (8) of vehicles (12), comprising
- at least one fixing ring (16) provided with an annular portion (20) and a base (24) delimiting a cylindrical seat (28) of longitudinal axis (X-X), adapted to accommodate a support rod (32) for said mudguard (8),
- the base being provided with fixing means to said mudguard (8), wherein said fixing means comprise a slide (40), adapted to make a shape coupling with a guide (44) of said mudguard (8), and stop means (48) of said slide (40) on the guide (44),
- the annular portion (20) being constrained to the base (24) at a hinging end (52) and a closing end (56), opposite the hinging end (52) with respect to the cylindrical seat (28),
- wherein said hinging end (52) comprises a pin (60) defining a hinge axis (Y-Y) parallel to said longitudinal axis (X-X), said pin (60) comprising at least one abutment (64,64') made in a single piece with the base (24) and rotatably housed within a rotation seat (68), counter-shaped, made in a single piece with the annular portion (20).

2. Locking/unlocking device (4) for a mudguard (8) of vehicles (12) according to claim 1, wherein said rotation seat (68) is open on the side opposite the base (24).

3. Locking/unlocking device (4) for a mudguard (8) of vehicles (12) according to claim 1 or 2, wherein said at least one abutment (64,64') is made in a single piece with a central upright (72) of the base (24).

4. Locking/unlocking device (4) for a mudguard (8) of vehicles (12) according to claim 3, wherein said pin (60) comprises a first abutment (64') and a second abutment (64"), made in a single piece and cantilevered from opposite sides with respect to the central upright (72) of the base (24), each of said abutments (64',64") being rotatably housed within a rotation seat (68',68") made in a single piece with the annular portion (20).

5. Locking/unlocking device (4) for a mudguard (8) of vehicles (12) according to claim 4, wherein each of said rotation seats (68', 68") is open on the side opposite the base (24).

6. Locking/unlocking device (4) for a mudguard (8) of vehicles (12) according to any one of claims 1 to 3, wherein said pin (60) comprises a first abutment (64') and a second abutment (64"), wherein said first abutment (64') is made in a single piece with a central upright (72) of the base (24) and is housed within a rotation seat (68',68") made in a single piece with the annular portion (20), and wherein said second abutment (64") is made in a single piece with the annular portion (20) and is housed within a rotation seat (68',68") obtained inside said central upright (72), on the side opposite the first abutment (64').

7. Locking/unlocking device (4) for a mudguard (8) of vehicles (12) according to claim 6, wherein the rotation seat (68') made in a single piece with the annular portion (20) is open on the side opposite the base (24), and wherein the rotation seat (68") made in a single piece with said central upright (72) is open on the side of the base (24) or vice versa.

8. Locking/unlocking device (4) for a mudguard (8) of vehicles (12) according to any one of claims 1 to 7, wherein the annular portion (20), at the hinging end (52), comprises a recess (76) which is counter-shaped with respect to said central upright (72).

9. Locking/unlocking device (4) for a mudguard (8) of vehicles (12) according to claim 8, wherein said recess (76) and/or said hinging end (52) is shaped so as to allow an rotation in opening of the annular portion (20) of at least 100 degrees.

10. Locking/unlocking device (4) for a mudguard (8) of vehicles (12) according to any one of claims 1 to 9, wherein the closing end (56) comprises an abutment plate (80) and a clamping hole (84).

11. Locking/unlocking device (4) for a mudguard (8) of vehicles (12) according to any one of claims 1 to 10, wherein the base (24), at the cylindrical seat (28), comprises a plurality of teeth (88) adapted to improve the grip on the associable support rod (32) of the mudguard (8).

12. Locking/unlocking device (4) for a mudguard (8) of vehicles (12) according to any one of claims 1 to 11, wherein the annular portion (20), at the cylindrical seat (28), comprises a plurality of teeth (88) adapted to improve the grip on the associable support rod (32) of the mudguard (8).

13. Locking/unlocking device (4) for a mudguard (8) of vehicles (12) according to any one of claims 1 to 12, wherein the locking/unlocking device (4) comprises two fixing rings (16), equal and mechanically separate from each other, each fixing ring (16) delimiting a cylindrical seat (28) of longitudinal axis (X-X), said cylindrical seats (28) being aligned with each other so as to accommodate the same support rod (32) for said mudguard (8).

14. Mudguard assembly comprising a locking/unlocking device (4) according to any one of claims 1 to 13, and a mudguard (8) provided with at least one guide (44) and at least one support rod (32), wherein said slide (40) is engaged on said at least one guide (44) and wherein said cylindrical seat (28) partially houses said support rod (32).

15. Mudguard assembly according to claim 14, wherein the mudguard (8) is provided with two guides (44',44") aligned with each other and the locking/unlocking device (4) is provided with two slides (40) and two cylindrical seats (28',28''), each slide (44',44'') being engaged in one of said guides (44',44") and wherein the cylindrical seats (28',28") are aligned with each other so as to accommodate the same support rod (26) for said mudguard (8).

## Patentansprüche

1. Verriegelungs-/Entriegelungsvorrichtung (4) für einen Kotflügel (8) von Fahrzeugen (12), aufweisend
- zumindest einen Fixierring (16), der mit einem ringförmigen Abschnitt (20) und einer Basis (24) versehen ist, der einen zylindrischen Sitz (28) der Längsachse (X-X) begrenzt, welcher derart angepasst ist, dass er eine Stützstange (32) für den Kotflügel (8) aufnimmt,
- die Basis, die mit einer Fixiereinrichtung an dem Kotflügel (8) vorgesehen ist, wobei die Fixiereinrichtung einen Schieber (40), welcher derart angepasst ist, dass er eine Formkopplung mit einer Führung (44) des Kotflügels (8) bildet, sowie eine Anschlagseinrichtung (48) des Schiebers (40) an der Führung (44) aufweist,
- den ringförmigen Abschnitt (20), der an der Basis (24) an einem Gelenkende (52) und einem Verschlussende (56) angebracht ist, das dem Gelenkende (52) in Bezug auf den zylindrischen Sitz (28) gegenüberliegt,
- wobei das Gelenkende (52) einen Stift (60) aufweist, der eine Gelenkachse (Y-Y) parallel zu der Längsachse (X-X) definiert, wobei der Stift (60) zumindest ein Widerlager (64, 64') umfasst, das in einem Stück mit der Basis (24) ausgebildet ist und drehbar innerhalb eines Drehsitzes (68) aufgenommen ist, der gegenläufig und in einem Stück mit dem ringförmigen Abschnitt (20) ausgebildet ist.

2. Verriegelungs-/Entriegelungsvorrichtung (4) für einen Kotflügel (8) von Fahrzeugen (12) nach Anspruch 1, wobei der Drehsitz (68) auf der Seite offen ist, die der Basis (24) gegenüberliegt.

3. Verriegelungs-/Entriegelungsvorrichtung (4) für einen Kotflügel (8) von Fahrzeugen (12) nach Anspruch 1 oder 2, wobei das zumindest eine Widerlager (64, 64') in einem Stück mit einer Zentralstrebe (72) der Basis (24) ausgebildet ist.

4. Verriegelungs-/Entriegelungsvorrichtung (4) für einen Kotflügel (8) von Fahrzeugen (12) nach Anspruch 3, wobei der Stift (60) ein erstes Widerlager (64') und ein zweites Widerlager (64") aufweist, die in einem Stück ausgebildet sind und von gegenüberliegenden Seiten in Bezug auf die Zentralstrebe (72) der Basis (24) freitragend sind, wobei jedes der Widerlager (64',64") drehbar innerhalb eines Drehsitzes (68',68") aufgenommen ist, der in einem Stück mit dem ringförmigen Abschnitt (20) ausgebildet ist.

5. Verriegelungs-/Entriegelungsvorrichtung (4) für einen Kotflügel (8) von Fahrzeugen (12) nach Anspruch 4, wobei jeder der Drehsitze (68', 68") auf der Seite offen ist, die der Basis (24) gegenüberliegt.

6. Verriegelungs-/Entriegelungsvorrichtung (4) für einen Kotflügel (8) von Fahrzeugen (12) nach einem der Ansprüche 1 bis 3, wobei der Stift (60) ein erstes Widerlager (64') und ein zweites Widerlager (64") umfasst, wobei das erste Widerlager (64') in einem Stück mit einer Zentralstrebe (72) der Basis (24) gebildet ist und innerhalb eines Drehsitzes (68', 68', 68") aufgenommen ist, der in einem Stück mit dem ringförmigen Abschnitt (20) ausgebildet ist, und wobei das zweite Widerlager (64") in einem Stück mit dem ringförmigen Abschnitt (20) ausgebildet ist und innerhalb eines Drehsitzes (68', 68") aufgenommen ist, der innerhalb der Zentralstrebe (72) erhalten wird, die sich auf der Seite befindet, die dem ersten Widerlager (64') gegenüberliegt.

7. Verriegelungs-/Entriegelungsvorrichtung (4) für einen Kotflügel (8) von Fahrzeugen (12) nach Anspruch 6, wobei der Drehsitz (68'), der in einem Stück mit dem ringförmigen Abschnitt (20) gebildet ist, auf der Seite offen ist, die der Basis (24) gegenüberliegt, und wobei der Drehsitz (68"), der in einem Stück mit der Zentralstrebe (72) gebildet ist, auf der Seite der Basis (24) offen ist oder umgekehrt.

8. Verriegelungs-/Entriegelungsvorrichtung (4) für einen Kotflügel (8) von Fahrzeugen (12) nach einem der Ansprüche 1 bis 7, wobei der ringförmige Abschnitt (20) am Gelenkende (52) eine Aussparung (76) aufweist, die in Bezug auf die Zentralstrebe (72) gegenläufig ist.

9. Verriegelungs-/Entriegelungsvorrichtung (4) für einen Kotflügel (8) von Fahrzeugen (12) nach Anspruch 8, wobei die Aussparung (76) und/oder das Gelenkende (52) derart geformt ist, dass sie eine Drehung beim Öffnen des ringförmigen Abschnitts (20) von zumindest 100 Grad ermöglicht.

10. Verriegelungs-/Entriegelungsvorrichtung (4) für einen Kotflügel (8) von Fahrzeugen (12) nach einem der Ansprüche 1 bis 9, wobei das Verschlussende (56) eine Widerlagerplatte (80) und eine Spannbohrung (84) aufweist.

11. Verriegelungs-/Entriegelungsvorrichtung (4) für einen Kotflügel (8) von Fahrzeugen (12) nach einem der Ansprüche 1 bis 10, wobei die Basis (24) an dem zylindrischen Sitz (28) eine Vielzahl von Zähnen (88) aufweist, die derart angepasst sind, dass sie den Halt an der zugehörigen Stützstange (32) des Kotflügels (8) verbessern.

12. Verriegelungs-/Entriegelungsvorrichtung (4) für einen Kotflügel (8) von Fahrzeugen (12) nach einem der Ansprüche 1 bis 11, wobei der ringförmige Abschnitt (20) an dem zylindrischen Sitz (28) eine Vielzahl von Zähnen (88) aufweist, die derart angepasst sind, dass sie den Halt an der zugehörigen Stützstange (32) des Kotflügels (8) verbessern.

13. Verriegelungs-/Entriegelungsvorrichtung (4) für einen Kotflügel (8) von Fahrzeugen (12) nach einem der Ansprüche 1 bis 12, wobei die Verriegelungs-/Entriegelungsvorrichtung (4) zwei gleiche und mechanisch voneinander getrennte Fixierringe (16) aufweist, wobei jeder Fixierring (16) einen zylindrischen Sitz (28) der Längsachse (X-X) begrenzt, wobei die zylindrischen Sitze (28) so zueinander ausgerichtet sind, dass sie dieselbe Stützstange (32) für den Kotflügel (8) aufnehmen.

14. Kotflügelanordnung, aufweisend eine Verriegelungs-/Entriegelungsvorrichtung (4) nach einem der Ansprüche 1 bis 13, und einen Kotflügel (8), der mit zumindest einer Führung (44) und zumindest einer Stützstange (32) versehen ist, wobei der Schieber (40) in die zumindest eine Führung (44) eingreift und wobei der zylindrische Sitz (28) die Stützstange (32) teilweise aufnimmt.

15. Kotflügelanordnung nach Anspruch 14, wobei der Kotflügel (8) mit zwei Führungen (44', 44") versehen ist, die zueinander ausgerichtet sind, und die Verriegelungs-/Entriegelungsvorrichtung (4) mit zwei Schiebern (40) und zwei zylindrischen Sitzen (28', 28', 28") versehen ist, wobei jeder Schieber (44', 44") in eine der Führungen (44', 44") eingreift und wobei die zylindrischen Sitze (28', 28") derart zueinander ausgerichtet sind, dass sie dieselbe Stützstange (2 6) für den Kotflügel (8) aufnehmen können.

## Revendications

1. Dispositif de verrouillage/déverrouillage (4) pour un garde-boue (8) de véhicules (12), comprenant
- au moins un anneau de fixation (16) doté d'une partie annulaire (20) et d'une base (24) délimitant un siège cylindrique (28) d'axe longitudinal (X-X), adapté pour contenir une tige de support (32) pour ledit garde-boue (8),
- la base étant dotée de moyens de fixation audit garde-boue (8), dans lequel lesdits moyens de fixation comprennent un coulisseau (40), adapté pour faire un accouplement de formes avec un guide (44) dudit garde-boue (8), et des moyens d'arrêt (48) dudit coulisseau (40) sur le guide (44),
- la partie annulaire (20) étant contrainte au niveau de la base (24) à une extrémité d'articulation (52) et une extrémité de fermeture (56), opposée à l'extrémité d'articulation (52) par rapport au siège cylindrique (28),
- dans lequel ladite extrémité d'articulation (52) comprend une broche (60) définissant un axe de charnière (Y-Y) parallèle audit axe longitudinal (X-X), ladite broche (60) comprenant au moins une butée (64, 64') faite d'une seule pièce avec la base (24) et reçue de manière rotative dans un siège à rotation (68), de forme complémentaire, fait d'une seule pièce avec la partie annulaire (20).

2. Dispositif de verrouillage/déverrouillage (4) pour un garde-boue (8) de véhicules (12) selon la revendication 1, dans lequel ledit siège à rotation (68) est ouvert sur le côté opposé à la base (24).

3. Dispositif de verrouillage/déverrouillage (4) pour un garde-boue (8) de véhicules (12) selon la revendication 1 ou 2, dans lequel ladite au moins une butée (64, 64') est faite d'une seule pièce avec un montant central (72) de la base (24).

4. Dispositif de verrouillage/déverrouillage (4) pour un garde-boue (8) de véhicules (12) selon la revendication 3, dans lequel ladite broche (60) comprend une première butée (64') et une seconde butée (64"), faites d'une seule pièce et en porte-à-faux à partir de côtés opposés par rapport au montant central (72) de la base (24), chacune desdites butées (64', 64") étant reçue de manière rotative dans un siège à rotation (68', 68") fait d'une seule pièce avec la partie annulaire (20).

5. Dispositif de verrouillage/déverrouillage (4) pour un garde-boue (8) de véhicules (12) selon la revendication 4, dans lequel chacun desdits sièges à rotation (68', 68") est ouvert sur le côté opposé à la base (24).

6. Dispositif de verrouillage/déverrouillage (4) pour un garde-boue (8) de véhicules (12) selon l'une quelconque des revendications 1 à 3, dans lequel ladite broche (60) comprend une première butée (64') et une seconde butée (64"), dans lequel ladite première butée (64') est faite d'une seule pièce avec un montant central (72) de la base (24) et est reçue dans un siège à rotation (68', 68") fait d'une seule pièce avec la partie annulaire (20), et dans lequel ladite seconde butée (64") est faite d'une seule pièce avec la partie annulaire (20) et est reçue dans un siège à rotation (68', 68") obtenu dans ledit montant central (72), sur le côté opposé à la première butée (64').

7. Dispositif de verrouillage/déverrouillage (4) pour un garde-boue (8) de véhicules (12) selon la revendication 6, dans lequel le siège à rotation (68') fait d'une seule pièce avec la partie annulaire (20) est ouvert sur le côté opposé à la base (24), et dans lequel le siège à rotation (68") fait d'une seule pièce avec ledit montant central (72) est ouvert sur le côté de la base (24) ou vice versa.

8. Dispositif de verrouillage/déverrouillage (4) pour un garde-boue (8) de véhicules (12) selon l'une quelconque des revendications 1 à 7, dans lequel la partie annulaire (20), à l'extrémité d'articulation (52), comprend un évidement (76) qui a une forme complémentaire par rapport audit montant central (72).

9. Dispositif de verrouillage/déverrouillage (4) pour un garde-boue (8) de véhicules (12) selon la revendication 8, dans lequel ledit évidement (76) et/ou ladite extrémité d'articulation (52) sont formés de manière à permettre une rotation dans l'ouverture de la partie annulaire (20) d'au moins 100 degrés.

10. Dispositif de verrouillage/déverrouillage (4) pour un garde-boue (8) de véhicules (12) selon l'une quelconque des revendications 1 à 9, dans lequel l'extrémité de fermeture (56) comprend une plaque de butée (80) et un trou de serrage (84).

11. Dispositif de verrouillage/déverrouillage (4) pour un garde-boue (8) de véhicules (12) selon l'une quelconque des revendications 1 à 10, dans lequel la base (24), au niveau du siège cylindrique (28), comprend une pluralité de dents (88) adaptées pour améliorer la prise sur la tige de support (32) associable du garde-boue (8).

12. Dispositif de verrouillage/déverrouillage (4) pour un garde-boue (8) de véhicules (12) selon l'une quelconque des revendications 1 à 11, dans lequel la partie annulaire (20), au niveau du siège cylindrique (28), comprend une pluralité de dents (88) adaptées pour améliorer la prise sur la tige de support (32) associable du garde-boue (8).

13. Dispositif de verrouillage/déverrouillage (4) pour un garde-boue (8) de véhicules (12) selon l'une quelconque des revendications 1 à 12, dans lequel le dispositif de verrouillage/déverrouillage (4) comprend deux anneaux de fixation (16), égaux et séparés mécaniquement l'un de l'autre, chaque anneau de fixation (16) délimitant un siège cylindrique (28) d'axe longitudinal (X-X), lesdits sièges cylindriques (28) étant alignés l'un sur l'autre de manière à contenir la même tige de support (32) pour ledit garde-boue (8).

14. Ensemble garde-boue comprenant un dispositif de verrouillage/déverrouillage (4) selon l'une quelconque des revendications 1 à 13, et un garde-boue (8) doté d'au moins un guide (44) et d'au moins une tige de support (32), dans lequel ledit coulisseau (40) est en prise sur ledit au moins un guide (44) et dans lequel ledit siège cylindrique (28) reçoit partiellement ladite tige de support (32).

15. Ensemble garde-boue selon la revendication 14, dans lequel le garde-boue (8) est doté de deux guides (44', 44") alignés l'un sur l'autre et le dispositif de verrouillage/déverrouillage (4) est doté de deux coulisseaux (40) et de deux sièges cylindriques (28', 28"), chaque coulisseau (44', 44") étant en prise dans l'un desdits guides (44', 44") et dans lequel les sièges cylindriques (28', 28") sont alignés l'un sur l'autre de manière à contenir la même tige de support (26) pour ledit garde-boue (8).
